# EUROPEAN PATENT APPLICATION

(11) **EP 0 630 705 A1**
(43) Date of publication of application: **28.12.1994**
(21) Application number: 94109670.3
(22) Date of filing: 22.06.1994
(51) Int. Cl.: B21D 53/04, B23P 15/26

(54) **Improved process and system for the production of elements for column radiators**

(30) Priority: 22.06.1993 IT BO930283; 22.06.1993 IT BO930284; 02.06.1994 IT TO940453
(71) Applicant: IRSAP - IRSOL S.r.l., I-45031 ARQUA' POLESINE (IT)
(72) Inventor: Zen, Alessandro, I-45100 Rovigo (IT)
(74) Representative: Jorio, Paolo

(57) **Abstract**

A process and system for the production of column radiator elements according to which the radiator elements (1), having two heads (2) and a plurality of columns (11) which connect the heads (2) together in a watertight manner are obtained by forming blanks (8, 60) by stamping, each of which blanks has at least one half-head (3, 61) which is coupled to another half-head (3, 61) to obtain a hollow body (22, 73) defining at least one head (2) which is coupled by welding to another head (2) with the interposition of a plurality of columns (11).

## Description

The present invention relates to a process for the production of elements for column radiators and, in particular, column radiators of the type comprising a plurality of elements each of which has two heads and at least two columns which connect the two heads together.

It is known to make the above-indicated elements by means of a process according to which each element is obtained starting from two hollow blanks made by stamping and each incorporating two half-heads, which are positioned over one another with their concave sides facing one another, and are connected together by spark welding in such a way as to obtain a hollow body comprising two heads and having a welding bead, which latter is removed in part by means of a shear device, and in part by means of a lapping machine.

Subsequently the said hollow body is cut transversely into two parts to obtain two heads which are again connected together by spark welding with the interposition of two or more tubular columns to form a said radiator element having, at each end of each column, a welding bead which is removed in part by a shear device and in part by means of a lapping machine.

The known process described above has numerous disadvantages.

In particular the use of spark welding makes it necessary that the bodies to be welded together have excess material at their respective edges to be joined so that the edges themselves can be brought to fusion temperature. During welding this excess material is partly sprayed away and partly enlarges the welding bead.

In essence the known process described above causes the production of a relatively high quantity of waste material constituted by the welding beads, which must be reduced by suitable shearing and lapping machines with the use of specialised labour.

At the completion of the known process described above, the radiator elements obtained still always have welding surplus in that, because of the relatively small working space, it is not normally possible to lap the parts of weld bead between adjacent columns.

As far as the previously-mentioned spark welding is concerned, it is suitable to raise the point that the excess material which is sprayed away during welding contaminates the welding machines which must therefore frequently be stopped for cleaning and maintenance. Finally, spark welding also involves the use of a large quantity of welding electrodes and heat fatiguing of the material to be welded.

From the above it will be immediately understood that a process such as the known process described above involves enormous investments both to produce a system having a relatively large number of machines of different types, and for the necessary space to house such machinery, as well as the necessary specialised personnel. It gives rise to relatively high production costs resulting from the energy necessary for spark welding, the number of electrodes consumed, and the waste material produced.

The object of the present invention is that of providing a process for the production of column-type radiator elements which will be free from the above-mentioned disadvantages.

According to the present invention there is provided a process for the production of column radiator elements, the said elements comprising two heads and a plurality of columns which connect the heads together in a water tight manner, characterised in that it comprises:
a stamping phase for producing blanks each of which comprises at least one half-head and has a first edge for coupling to a corresponding first edge of another said blank;
a connection phase to produce a hollow body comprising at least one said head starting from two said blanks brought together; and
a first welding phase to connect two said heads and at least two said columns at respective opposite ends of the columns themselves, each head having a respective coupling edge for connecting to a corresponding respective end of each said column;
the said connection phase including the sub-phase of bringing together two said blanks in counterposed positions with respect to one another with the said respective first coupling edges in coincidence with one another, and a second welding phase for welding the said two blanks along the first coupling edges in contact with one another; and
the said two welding phases being two welding phases in inert atmosphere with electrodes of tungsten.

Further, the present invention relates to a system for the production of column-type radiator elements.

According to the present invention there is provided a system for the production of column-type radiator elements, each said element being defined by two heads and a plurality of columns which connect the said heads together mechanically and in a watertight manner, the system being characterised by the fact that it comprises a first stamping station for making first blanks each comprising at least one half head and each having a first edge for coupling to a corresponding first edge of another said blank; a second station for making second blanks each comprising a hollow body comprising at least one said head, starting from two said first half blanks brought together; a third station for positioning two said heads in contact with respective said columns, each head having a respective second coupling edge for coupling to a corresponding respective end of each said column; and a fourth, welding, station for welding said two heads to respective said columns; the said second station including means for bringing two facing said blanks into contact with one another along the said respective first coupling edges, and a fifth, welding, station, for joining together the contacting first said coupling edges; the said fourth and fifth stations each being a welding station in inert atmosphere with electrodes of tungsten including at least one respective electro nically controlled electric current generator, and at least one respective electrode of tungsten connected to said generator and displaceable along the associated coupling edges.
The present invention will now be described with reference to the attached drawings which illustrate two non-limitative embodiments thereof, in which:
Figures 1 and 2 partially illustrate, in block diagram form, respective parts of a first preferred embodiment of the system of the present invention;
Figure 3 is a side view of a radiator element made using the system of Figures 1 and 2;
Figure 4 illustrates on an enlarged scale a blank formed in the system of Figures 1 and 2;
Figure 5 partially illustrates in block diagram form a part of a second preferred embodiment of the system of the present invention; and
Figure 6 illustrates on an enlarged scale a blank formed with the system of Figure 5.

For convenience, here and hereinafter, the words "welding in inert atmosphere with electrodes of tungsten" and the words "TIG welding" or "TIG technology", in which the abbreviation TIG replaces, in common use, the definition Tungsten Inert Gas welding, are to be considered equivalent to one another.

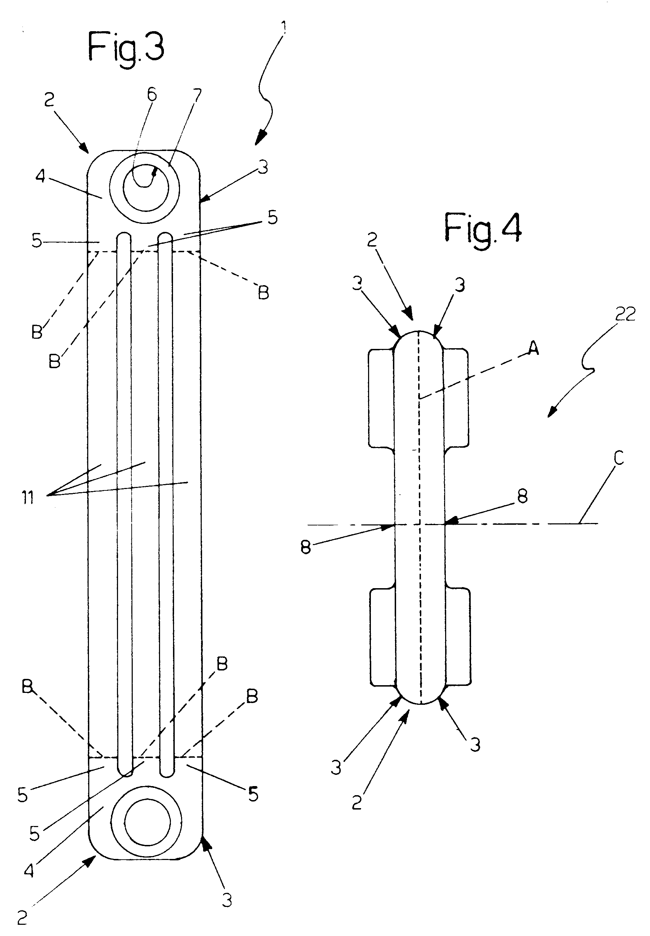

As illustrated in Figure 3 the reference numeral 1 generally indicates a metal element for known column radiators not illustrated. The element 1 has at opposite ends two identical heads 2. Each head 2 is formed by two half-heads 3 welded together along respective coupling edges A. Each half-head 3 is formed by a substantially rectangular plate 4 which on three contiguous sides has its perimetral edge folded in an arc in section. Along the fourth edge of the plate 4 are formed three parallel projections 5. The projections 5 have their ends curved in a circumferential arc in section in a manner such that each projection 5 has a semi-cylindrical shape. The plate 4 has a through-hole 6 around which, integrally with the plate 4, is formed a tubular sleeve 7 which allows hydraulic communication between adjacent elements 1 of the radiator. In summary each head 2 comprises a portion defined by the plates 4 of the two half-heads 3 welded together along the folded edges of the said three contiguous sides, and spigots 5a each of which is defined by a pair of projections 5 welded together and having a substantially circular end edge 5b.

In use, starting from a metal plate, a blank 8 (Figure 4) is made by stamping, this being defined by two half-heads 3 which have their plates 4 coplanar; the projections 5 of each half-head 3 are aligned with and integral with the projections 5 of the other half-head 3. The element 1 finally includes three columns 11 each of which is welded at each end and along a respective weld line B to the edge 5B of a respective spigot of a respective head 2.

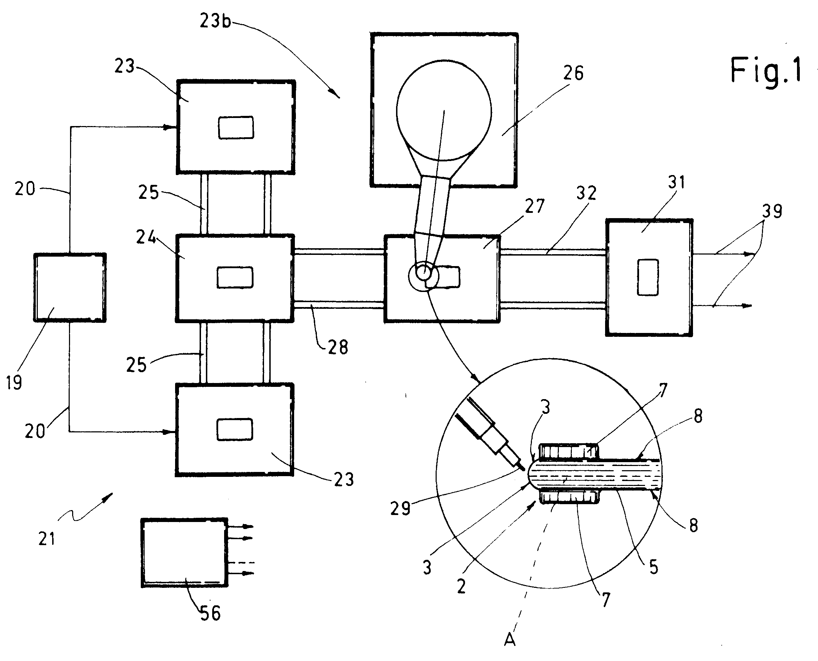

With reference to Figure 1 the reference numeral 21 indicates a first part of a system for the production of the radiator elements 1. In particular the part 21 of the system has the object of making a head 2 (Figure 4) defined by welding together two blanks 8.

The part 21 of the system comprises;
a stamping station 19 for producing the blanks 8; two magazines 23 for blanks 8;
conveyor devices 20 (schematically illustrated) for transporting blanks 8 to the two magazines 23.

The part 21 of the system further includes a station 23b in turn comprising:
a station 24 for bringing together two blanks 8, one supplied from the first magazine 23 and the other supplied from the second magazine 23;
conveyor devices 25 for conveying blanks 8 from the magazines 23 to the station 24;
an electronically controlled electric current generator 26;
a TIG welding station 27 in which an electrode 29 of tungsten welds along the lines A of two superimposed blanks 8;
a conveyor device 28 for conveying a body 22 defined by the superimposition of two blanks in the station 24 towards the welding station 27; and
a cutting station 31 for cutting the body 22 along a plane C in such a way as to define two heads 2.

The part 21 of the system finally includes a device 32 for conveying the body from the welding station 27 to the cutting station 31.

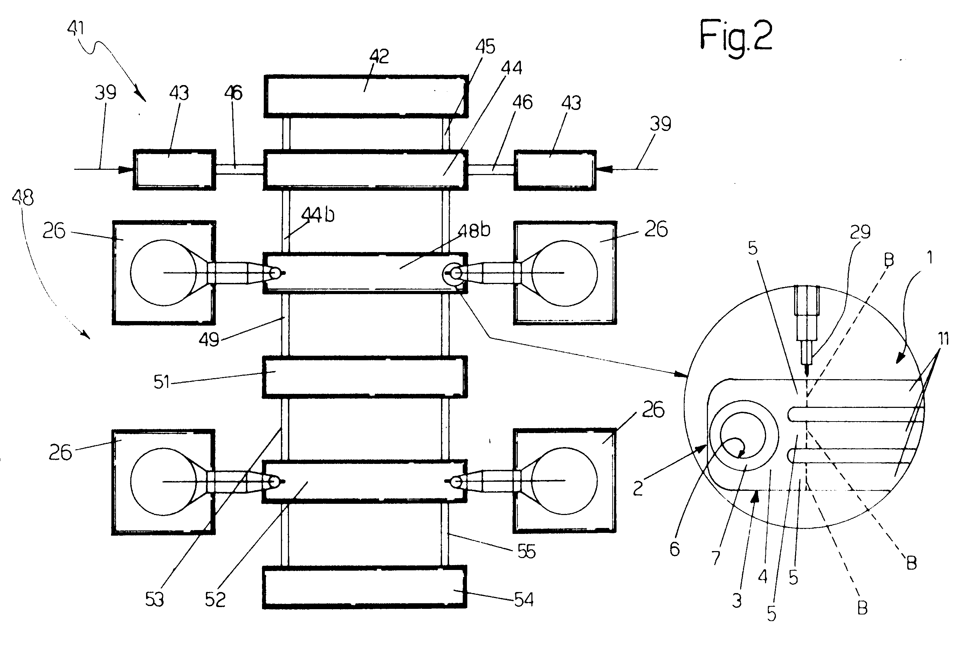

With reference to Figure 2, the reference numeral 41 indicates a second part of the system for the production of elements 1.

The part 41 of the system comprises:
a magazine 42 for columns 11;
two magazines 43 for heads 2 which have arrived from the part 21 of the system via schematically illustrated conveyor devices 39;
a station 44 for assembling three columns 11 and two heads 2, the columns being supplied from the magazine 42, one head 2 being supplied from the first of the magazines 43 and the other head 2 being supplied from the second of the magazines 43;
a conveyor device 45 for conveying columns 11 from the magazine 42 to the assembling station 44;
a conveyor device 46 for conveying heads 2 from the magazines 43 to the assembling 44;
a welding station 48;
a conveyor device 44b for conveying elements 1 from the assembling station 44 to the station 48;
a discharge station 54 for discharge of the finished elements 1; and
a conveyor device 55 for conveying the elements 1 from the station 48 to the station 54.

The station 48 comprises:
four further electronically controlled electric current generators 26;
a TIG welding station 48b in which two electrodes 29 of tungsten, each supplied by a respective electronically controlled electric current generator 26, weld the columns 11 to the edges 5b of the spigots 5a of the two heads 2 on a first side of the element 1, along the lines B of Figure 3;
a station 51 in which the element 1 exiting from the station 48b is inverted;
a conveyor device 49 for conveying the element 1 from the station 48 to the station 51;
a TIG welding station 52 in which two electrodes 29 of tungsten, each supplied by a respective generator 26 weld, on a second face of the element 1, along the lines B, the columns 11 to the edges 5b of the spigots 5a of the two heads 2;
a conveyor device 53 for conveying the element 1 from the station 51 to the station 52.
The installation finally includes an electronic central control unit 56 which manages the entire cycle of operation and in particular the various working stations and the workpiece conveying devices.

In use of the process according to the principles of the present invention the following phases take place in succession:
production of blanks 8 by stamping in the station 19;
supply of blanks 8 to the two magazines 23 by respective conveyor devices 20;
transfer of two blanks 8 from magazines 23 to the station 24 by respective conveyor devices 25;
assembly of two blanks 8 in the station 24;
transfer of two superimposed blanks 8 to a TIG welding station 27 by the conveyor devices 28;
welding by means of the electrode 29 of tungsten along the lines A of two superimposed blanks 8;
transfer of the body 22 formed in the station 27 to the cutting station 31 by conveyor device 32;
cutting the body along the plane C in such a way as to form two heads 2 in the station 31;
transfer of each head 2 from the station 31 to a respective magazine 43 by the conveyor device 39;
transfer of three columns 11 and two heads 2 from the magazine 42 and the magazines 43 to the assembling station 44 by conveyor devices 46;
assembly of the three columns 11 and the two heads 2 supplied in the station 44;
transfer the three columns 11 and the two heads 2, assembled together in the station 44, to the station 48b by the conveyor device 48b;
welding of the columns 11 to the edges 5b of the spigots 5a of the two heads 2 by two electrodes 29 of tungsten on a first face of the element 1 along the lines B;
transfer of the element 1 from the output of the station 48 to the inverting station 51 by the conveyor device 49;
inversion of the element 1 in the station 51;
transfer of the inverted element 1 to the TIG welding station 52 by the conveyor device 53;
welding of the columns 11 to the edges 5b of the spigots 5a of the two heads 2 by two electrodes 29 of tungsten on a second face of the element 1 along the lines B; and
transfer of the element 1 from the output of the station 52 to a discharge station 54 by the conveyor device 55.

From what has been described it will be apparant how the advantages of the present invention are achieved.

In particular there is provided a process which utilises TIG technology for welding the various components of the element 1. This gives rise to an undoubted advantage in that thanks to the TIG technology the triggering of the electric arc between the electrode and the piece to be welded does not present any difficulty. To trigger the electric arc, in fact, it is sufficient to bring an electrode of tungsten in the welding position; the triggering being caused by an auxiliary electrostatic generator incorporated in each current generator. The electric arc, when fed with a direct current, becomes stable and does not require any particular procedure for being maintained during welding.
With the TIG technology weld beads are formed of extreme ly small thickness so that refinishing working (shearing and lapping) is no longer necessary. Moreover, the plant the subject of the present invention has reduced operating costs owing to both the reduced energy consumption (deriving from the use of the TIG technology), and to the fact that the working cyle is automatic.

It can immediately be seen that if stamped blanks were to be considered comprising a single half-head 3, and thus ready to be assembled together in superimposed positions and welded by means of TIG technology; it would be possible to eliminate the cutting station for the body 22 and the corresponding accessory devices, with a large saving in terms of investment, labour, operating costs and, moreover, time necessary for the fulfilment of orders. This has been achieved via the second embodiment of the present invention which will be described hereinafter and which is different from the first embodiment already described solely as regards the part 21 of the system. For this reason the description of the said second embodiment will be directed principally to the new part of the system replacing the part 21, whilst for the remaining parts of the system the same reference numerals will be used to distinguish the corresponding parts described in relation to the first embodiment.

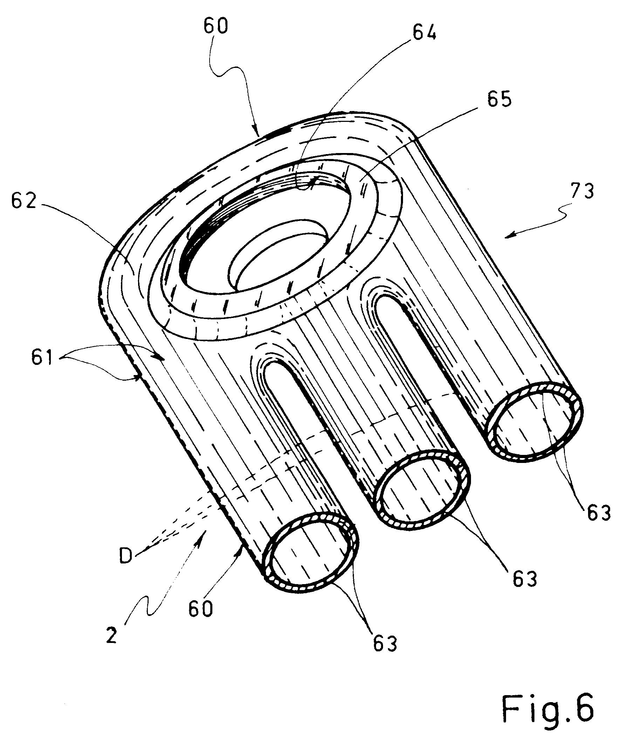

As illustrated in Figure 6, a blank 60 comprises a half-head 61 and a counterpart (see half-head 3 of Figures 2, 3 and 4). Each half-head 61 is defined by a plate 62 (see plate 4 of Figures 2 and 3) which is substantially rectangular and which on three contiguous sides has its perimetral edge rolled in an arc. Along the fourth side of the plate 62 are formed three projections 63 (see projections 5 of Figure 3) parallel to one another. The projections 63 have their longitudinal edges rolled in an arcuate section in such a way that each projection 63 has a semi-cylindrical shape. A through-hole 64 is formed in the plate 62 (see hole 6 of Figures 2 and 3) in correspondence with which, integrally with the plate 62, is formed a tubular sleeve 65 (see tubular sleeve 7 of Figures 2 and 3) which serves for hydraulic communication between the various elements 1 (see Figure 3) of the radiator. Finally, each head 2 comprises a portion defined by the plates 62 of the two half-heads 61 welded together along respective rolled coupling edges D (see A of figures 1 and 4) of the said three contiguous sides, to form spigots defined by the projections 63 of the two half-heads 61 welded together along the rolled edges.

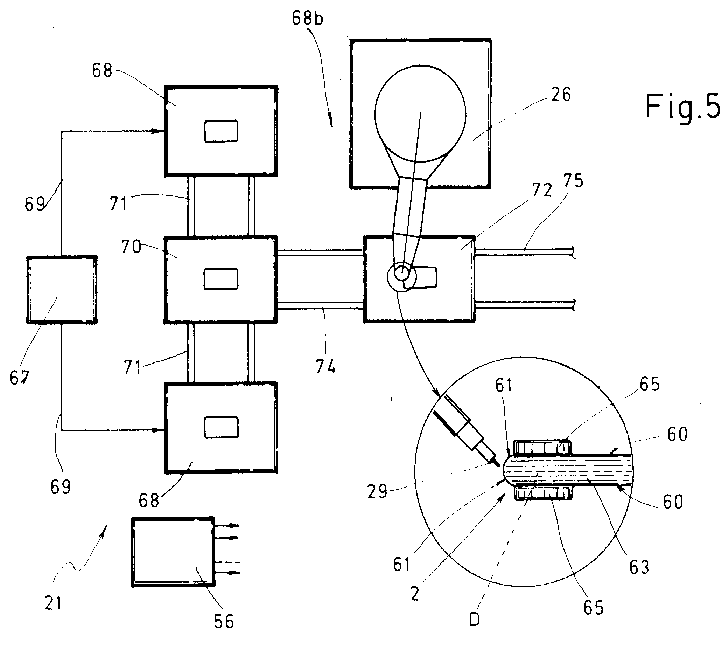

With reference to Figure 5, the reference numeral 21 indicates the first part of a system for the production of radiator elements 1 according to the said preferred embodiment for producing a head 2 by TIG welding of two blanks 60.

The part 21 of the system comprises:
a stamping station 67 for producing the blanks 60;
two magazines 68 for blanks 60;
conveyor devices 69 (schematically illustrated) for conveying blanks 60 to the two magazines 68.

The part 21 of the system further includes a station 68b in turn comprising:
a station 70 for assembling two blanks 60, one fed from the first magazine 68 and the other from the second magazine 68;
devices 71 for conveying blanks 60 from the magazines 68 to the station 70;
an electronically controlled electric current generator 26; and
a TIG welding station 72 operable to produce bodies 73 (Figure 6) substantially identical to the heads 2, in which an electrode 29 of tungsten welds along th edges D of two assembled blanks 60.

The part 21 of the system further includes:
a device 74 for conveying assembled blanks 60 from the station 70 to the welding station 72;
a conveyor device 75 for conveying bodies 73 to the said magazines 43; and, finally,
a central electronic control unit 56 which manages the entire operating cycle and in particular the various operating stations and the workpiece conveyor devices.

In use the process according to the preferred embodiment of the present invention performs the following steps:
produce blanks 60 by stamping in the station 67;
supply blanks 60 to the two magazines 68 by conveyor devices 69;
transfer two blanks 60 from the magazines 68 to the station 70 by conveyor devices 71;
assemble two blanks 60 in the station 70;
transfer two assembled blanks 60 to a TIG welding station 72 by conveyor devices 74;
weld the two assembled blanks 60 along the edges D by means of the electrode 29 of tungsten; and
transfer each head 2 formed in the station 72 into a respective magazine 43 (Figure 2) by conveyor devices 75.

Finally, it is clear that the processes and systems described and illustrated here can have modifications and variations introduced thereto without by this departing from the protective ambit of the present invention.

## Claims

1. A process for the production of column radiator elements (1) the said elements (1) comprising two heads (2) and a plurality of columns (11) which connect the heads (2) together in a watertight manner, characterised in that it comprises:
a stamping phase to produce first blanks (8, 60) by stamping, each of which comprises at least a half-head (3) having a first edge (A) for connection to a corresponding first edge (A) of another of the said blanks (8, 60);
a connection step to produce a hollow body (22, 73) comprising at least one said head (2) starting from two said first blanks (8, 60) assembled together; and
a first welding phase to connect two said heads (2) to at least two said columns (11) at respective opposite ends of the columns (11) themselves, each head (2) having a respective second edge (5b) for connecting to a corresponding respective end of each said column (11);
the said connection phase comprising the sub-phase of assembling together two said first blanks (8, 60) in counterposed positions by bringing the said respective first connection edges (A) into coincide with each other, and a second phase of welding the said two first blanks (8,60) along the first connection edges (A) in contact with one another; and
the said two welding phases being two welding phases in inert atmosphere with electrodes of tungsten.

2. a process according to Claim 1, characterised in that each blank (8) comprises two half-heads (3) disposed in specular positions with respect to one another across a transverse median plane (C), and in that the said hollow body (22) in turn comprises two heads (2) disposed in specular positions with respect to one another across the said transverse median plane (C); the said connection phase comprising a further subphase of cutting the said hollow body (22) along the said transverse median plane (C).

3. A process according to Claim 1 or Claim 2, characterised in that the said first welding phase comprises the phases of welding the said columns (11) to the said two heads (2) along a first half of each of the said second connecting edges (5b) by two TIG welding electrodes (29) on a first face of the said element (1); inverting the said element (1); welding the said columns (11) to the said two heads (2) by means of two said electrodes (29) on a second face of the said element (1) and along a second half of each of the said second connecting edges (5b).

4. A system for the production of column radiator elements (1), each of the said elements (1) being defined by two heads (2) and a plurality of columns (11) which mechanically and hydraulically connect the said heads (2) together, and the system being characterised by the fact that it comprises a first, stamping, station (19, 67) for producing the said first blanks (8, 60) each comprising at least a half-head (3) and each provided with a first connecting edge (A) for connecting to a corresponding first edge (A) of another said blank (8,60); a second station (23b, 68b) for producing a second blank comprising a hollow body (22, 73) in turn including at least one said head (2) starting from two said first blanks (8,60) assembled together; a third station (44) for positioning two said heads (2) in contact with respective said columns (11), each head (2) having a respective second connecting edge (5b) for connecting to a corresponding respective end of each said column (11); and a fourth, welding, station (48) for welding the said two heads (2) to the respective said columns (11); the said second station (23b, 68b) including means (25, 71) for bringing two said blanks (8, 60) disposed facing one another, into contact along the said respective first connecting edges (A), and a fifth, welding, station (27, 72) for fixedly connecting together the said first connecting edges (A) in contact with one another; and the said fourth (48) and fifth (27, 72) station each being a welding station in inert atmosphere with electrodes of tungsten including at least one respective electronically controlled electric current generator (26), and at least one respective electrode (29) of tungsten coupled to the said generator (26) and displaceable along the associated coupling edges (A).

5. A system according to Claim 4, characterised in that the said second station (23b) includes cutting means (31) for cutting the said body along the said transverse median plane (C) in such a way as to define two said heads (2).

6. A system according to Claim 4 or Claim 5, characterised in that the said fourth station (48) comprises two TIG welding stations (48b, 52); at least two said electric current generators (26) each of which is operable to supply a respective electrode (29) of tungsten; and an inverting station (51) for inventing the said element (1) to permit the said two electrodes (29) of tungsten to act first on one face and then on an opposite face of the said heads (2).

7. A system according to any of Claims 4, 5 or 6, characterised in that it includes conveyor means (69) for transferring the said blanks (8, 60) between the said stamping station (19, 67) and the said magazines (23, 68); conveyor means (28, 74) for transferring the said hollow bodies (22, 73) from the coupling station (24, 70) to the welding station (27, 72); and conveyor means (45) for carrying the said columns (11) from a respective magazine (42) to the said third station (44).

8. A system according to Claim 7, characterised in that it includes an electronic central control unit (56) for managing the said stations and the said conveyor means in phase with one another.
